# FASCICULE DE BREVET EUROPEEN

(11) **EP 3 694 655 B1**
(45) Date de publication et mention de la délivrance du brevet: **01.12.2021**
(21) Numéro de dépôt: 18796725.2
(22) Date de dépôt: 11.10.2018
(51) Int. Cl.: B05B 11/00

(54) **DISPOSITIF DE DISTRIBUTION DE PRODUITS LIQUIDES À PÂTEUX ET SON DISPOSITIF DE FERMETURE FORMANT UN MODULE**
VORRICHTUNG ZUR AUSGABE VON FLÜSSIGEN BIS PASTÖSEN PRODUKTEN UND MODULFORMENDE VERSCHLUSSVORRICHTUNG DAFÜR
DEVICE FOR DISPENSING LIQUID-TO-PASTY PRODUCTS AND MODULE-FORMING CLOSURE DEVICE THEREFOR

(30) Priorité: 12.10.2017 FR 1759572; 06.11.2017 FR 1760380
(43) Date de publication de la demande: 19.08.2020
(73) Titulaire: Promens SA, 01100 Bellignat (FR)
(72) Inventeur: HENNEMANN, Pascal, 39360 Vaux Les Saint Claude (FR); KURTZ, Joey, 67310 Wasselonne (FR)
(74) Mandataire: Novagraaf Technologies
(86) Numéro de dépôt international: PCT/FR2018/052531
(87) Numéro de publication internationale: WO 2019/073180

(56) Documents cités:
- EP-A1- 1 449 595
- FR-A1- 2 976 981
- JP-A- H0 752 980
- NL-A- 6 918 423

## Description

### Domaine technique

La présente invention concerne le domaine des dispositifs de distribution d'un produit à distribuer liquide à pâteux, notamment une crème, une pommade ou une pâte, notamment à usage cosmétique.

### Etat de la technique

Le document FR2976981A1 décrit un dispositif de fermeture de pompe a deux clapets possédant un clapet haut de fermeture du trou de la buse de sortie du bouton poussoir. Ce clapet haut de fermeture fonctionne avec une différence de pression de chaque côté de la membrane fixe qui sépare l'intérieur de la pompe de l'extérieur. Quand la pression intérieure est supérieure à la pression extérieure, la membrane se déforme et fait reculer le clapet haut qui ouvre le trou de sortie de la buse.

C'est ce qui se produit quand on actionne la pompe en pressant sur le bouton poussoir ; on génère une pression à l'intérieur de la pompe qui ouvre le clapet haut et permet au produit de sortir. Quand le bouton poussoir remonte, il génère une dépression plus faible à l'intérieur de la pompe, dépression nécessaire pour aspirer le produit contenu dans le réservoir dans la chambre de dose, ce qui provoque la déformation inverse sur la membrane du clapet haut, qui avance et permet de fermer le trou de sortie de la buse.

Avec seulement cette membrane, il existerait un risque que ce fonctionnement soit perturbé, lorsque le système est soumis à une pression extérieure plus faible, par exemple dans des cabines d'avions ou en montagne, qui dans ce cas provoque l'ouverture intempestive et non volontaire du trou de sortie du bouton poussoir car dans ce cas la pression à l'intérieur du système est alors supérieure à la pression extérieure.

Pour remédier à ce problème, le document FR2976981A1 ajoute à l'arrière du clapet haut une cloche fermée étanche permettant de maintenir une pression stable et constante derrière la membrane du clapet haut, ce qui évite toute ouverture intempestive en cas de légère dépression à l'extérieur du système.

Cependant, le dispositif du document FR2976981A1 nécessite une cloche fermée à l'arrière du clapet haut; c'est un système complexe à assembler et le déplacement de la membrane du clapet haut se fait dans une cloche fermée de faible volume, qui limite le déplacement en ouverture du clapet haut. En effet quand il se déplace dans la cloche, le clapet haut crée une surpression à l'intérieur de la cloche étanche, qui limite son ouverture.

Le document JP H07 52980 A divulgue un autre exemple de dispositif de fermeture à clapet haut et membrane.

### Exposé de l'invention

La présente invention a pour but de remédier aux problèmes de fonctionnement de l'art antérieur cité ci-dessus.

A cet effet, un premier objet de l'invention est un dispositif de fermeture destiné à être monté dans un dispositif de distribution d'un produit à distribuer liquide à pâteux, ledit dispositif de fermeture formant un module consistant en:
- une buse de sortie comprenant une cavité et des parois extérieures délimitant cette cavité, ces parois extérieures présentant plusieurs trous et ouverture traversants : un trou de sortie à l'avant de la buse, une ouverture arrière, et un trou d'admission destiné à être connecté à une chambre de dosage d'un moteur de pompe du dispositif de distribution,
- un clapet haut formé uniquement par :
   ∘ un obturateur, agencé à l'intérieur de la cavité et mobile entre une position avancée dans laquelle il obture le trou de sortie et une position reculée dans laquelle il dégage ce trou de sortie,
   ∘ une membrane déformable et fermant de manière étanche l'ouverture arrière et solidaire de l'obturateur, et
   ∘ un squelette rigide s'étendant entre une première extrémité fermant le trou de sortie en ladite position avancée et une deuxième extrémité portant la membrane,
- une cloche présentant un fond et une ouverture de base opposée à ce fond, les bords de l'ouverture de base étant fixés à la buse, la membrane fermant de manière étanche également l'ouverture de base.

Selon l'invention, dans ce dispositif de fermeture, la membrane présente une souplesse et le dispositif de fermeture est agencé de manière à ce qu'une dépression à l'intérieur de la cavité entraine une déformation de la membrane vers l'intérieur de la cavité, de manière à ce que la membrane pousse alors l'obturateur vers la position avancée.

Selon l'invention, notamment selon le paragraphe précédent, le dispositif de fermeture peut former un module consistant en uniquement ces pièces : la buse, un clapet haut, et la cloche. C'est-à-dire que l'on a seulement trois pièces distinctes assemblées entre elle. En effet dans ce cas, le clapet haut forme une seule pièce au regard de l'assemblage du module, puisque l'obturateur et la membrane sont solidarisés entre eux par le squelette, formant ainsi un élément solidaire à assembler avec la buse et la cloche.

Selon l'invention, le clapet haut peut être formé uniquement par la membrane et l'obturateur, solidarisés par le squelette.

Ainsi, on obtient un module autonome simplifié, apte à être couplé à un moteur de pompe d'un dispositif de distribution, simplifiant ainsi l'assemblage de ce dernier. Notamment, le dispositif de fermeture est apte à être monté à l'intérieur d'un bouton poussoir solidaire du moteur de pompe.

La réalisation est d'autant plus simplifiée que le dispositif de distribution ne nécessitera qu'un clapet bas à l'admission en produit dans la chambre de dosage, l'obturateur et la membrane formant le clapet haut du dispositif de distribution, dans lequel sera monté le dispositif de fermeture. Ce dispositif de fermeture permet donc l'assemblage d'un dispositif de distribution avec seulement deux clapets, dont le clapet haut est compris dans ce dispositif de fermeture.

Par ailleurs, ce dispositif de fermeture se referme en cas de dépression dans la cavité par l'effet même de cette dépression, donc sans avoir recours à un ressort puissant pour réaliser cette action, voire sans utiliser de ressort. Par exemple, lorsque le dispositif de fermeture est monté dans un dispositif de distribution avec moteur de pompe, lors de l'aspiration du liquide dans la chambre de dosage, notamment lorsque l'on relâche le bouton poussoir, la cavité entre en dépression, ce qui entraine la fermeture du trou de sortie.

De plus, malgré un assemblage simple du module, on conserve néanmoins un bon guidage de l'obturateur et une bonne transmission de la force de fermeture de la membrane à l'obturateur, notamment à son extrémité pour fermer le trou de sortie grâce au squelette rigide.

A noter que la première extrémité peut fermer le trou de sortie en ladite position avancée indirectement, la portion de l'obturateur fermant ce trou de sortie étant directement dans son prolongement, la première extrémité appuyant ainsi l'obturateur en fermeture sur la sortie et fermant donc cette dernière via cette portion. Notamment, la première extrémité est au niveau d'une base du téton, ce téton s'étendant entre sa base à une extrémité libre du téton.

Le dispositif de fermeture selon l'invention peut optionnellement présenter une ou plusieurs des caractéristiques suivantes prises séparément ou en combinaison :
- les bords de l'ouverture de base sont fixés à la buse de manière à ce que la cloche et la buse prennent les bords de la membrane en étau; c'est une manière simple d'assembler la membrane à la buse et à la cloche tout en les séparant de manière étanche ;
- la membrane est formée d'un matériau souple bi-injectée sur ledit squelette ; cela permet de réaliser le clapet haut de manière davantage solidaire comme une seule pièce ;
- l'obturateur est agencé de manière à pénétrer en force dans le trou de sortie lorsque la membrane pousse l'obturateur vers ladite position avancée ;
- l'obturateur présente une extrémité souple compressible radialement ;
- l'obturateur affleure la surface extérieure de la buse au bord du trou de sortie ;
- la cloche présente également au moins un évent communiquant entre l'intérieur et l'extérieur de la cloche ;
- le clapet haut comprend un revêtement souple bi-injecté sur le squelette, ce revêtement recouvrant une première extrémité du squelette de manière à former un téton et s'étendant à la deuxième extrémité du squelette en en formant la membrane sensiblement transversalement à l'axe longitudinal du squelette ; ainsi le téton peut former la portion de l'obturateur venant directement obturer la sortie ; cela permet de renforcer également la cohésion du clapet haut en une seule pièce ;
- ce revêtement s'étend à la deuxième extrémité du squelette en formant une coupelle sensiblement transversale à l'axe longitudinal du squelette, la coupelle formant la membrane ;
- la membrane est élastique de manière à générer, lorsqu'elle se déforme, une force de rappel élastique au niveau de la membrane souple, lorsque sa surface est sollicitée par des différences de pression de chaque côté de la membrane ;
- le dispositif de fermeture est dépourvu de moyen de rappel de l'obturateur vers la position avancée autre que la membrane.

Un autre objet de l'invention est un dispositif de distribution de produit liquide à pâteux comprenant:
- un moteur de pompe avec une chambre de dosage,
- un clapet bas pour ouvrir ou fermer l'entrée de cette chambre,
- un logement,
- un dispositif de fermeture selon l'invention, logé dans le logement, et agencé de manière à ce que le trou d'admission soit en communication avec l'intérieur de la chambre de dosage.

Le dispositif de distribution selon l'invention peut optionnellement présenter une ou plusieurs des caractéristiques suivantes prises séparément ou en combinaison :
- le logement est ouvert en haut de manière à ce que le dispositif de fermeture se monte par le haut dans le logement ;
- le moteur de pompe comprend :
   o un bouton-poussoir, dans lequel est formé le logement, et
   o une coiffe recouvrant le dispositif de fermeture par-dessus et fermant le logement ;
- le dispositif de distribution comprend un organe de raccordement à un récipient de produit liquide à pâteux, et dans ce dispositif de distribution, le moteur de pompe comprend en outre :
   ∘ un bouton-poussoir mobile par rapport à l'organe de raccordement entre une position basse et une position haute,
   ∘ un piston fixe par rapport l'organe de raccordement, le piston comprenant une ouverture sommitale communiquant d'un côté avec l'intérieur de la chambre de dosage et étant destinée de l'autre côté à être en communication avec le contenu du récipient,
   ∘ une poche souple délimitant la chambre de dosage latéralement, fixée en haut au bouton-poussoir et en bas au piston,
   ∘ un moyen élastique de rappel agencé de manière à ce que sa contrainte augmente quand le bouton-poussoir se déplace vers sa position basse,
   la poche souple et le piston étant agencés de manière à ce que lorsque le bouton-poussoir est en position haute, la poche souple soit agencée au-dessus du piston, à ce que lorsque le bouton-poussoir descend vers la position basse la poche souple s'affaisse sur le piston, entrainant une augmentation de pression dans la chambre de dosage, et à ce que lorsque le bouton-poussoir monte vers la position haute la poche souple se déploie au-dessus du piston, entrainant une diminution de pression dans la chambre de dosage, le clapet bas étant agencé de manière à ouvrir ou fermer l'entrée de chambre sous l'exercice respectivement d'une diminution de pression ou d'une augmentation de pression dans la chambre de dosage ;
   il s'agit d'une forme simple de réalisation permettant notamment de réduire les volumes morts ;
- la poche souple est agencée de manière à ce qu'elle s'affaisse en se retournant sur elle-même, ses parois latérales s'enroulant alors autour du piston ; la poche peut ainsi avoir une forme très simple ;
- la poche souple est reliée au clapet bas de manière à délimiter avec celui-ci le fond de la chambre de dosage ; cela simplifie davantage la réalisation de la poche ;
- la poche souple et le clapet bas forment une seule pièce monobloc formée d'un seul matériau ; la réalisation du dispositif est encore davantage simplifiée ;
- la poche souple présente un fond percé d'un orifice d'entrée, qui est agencé de manière à se plaquer et se fermer contre une portion du piston décalée par rapport à l'ouverture sommitale sous l'exercice d'une augmentation de pression dans la chambre de dosage, et à s'en écarter sous l'exercice d'une diminution de pression dans la chambre de dosage ; ainsi la portion du fond de la poche autour de l'orifice d'entrée forme le clapet bas; lorsque cette portion du fond s'écarte du piston, un passage est alors libéré entre l'ouverture sommitale et l'orifice d'entrée ; c'est une forme très simple de réalisation dans laquelle, grâce à un simple trou, la poche forme à la fois les parois latérales et le fond de la chambre de dosage ainsi que le clapet bas ;
- le fond de la poche souple présente une ou des fixation au piston, ces fixations étant réparties autour d'une zone englobant l'orifice d'entrée et l'ouverture sommitale ; cela permet de former une articulation des bords de l'orifice d'entrée, la portion du fond entre ces fixations et comprenant l'orifice d'entrée forme ainsi le clapet bas; ces fixations peuvent notamment être des projections saillantes de la surface inférieure du fond de cette poche ;
- le moyen élastique de rappel est un ressort à spires agencées autour du piston et de la poche souple et pris en étau entre le bouton-poussoir et l'organe de raccordement ; c'est une forme compacte de réalisation ;
- la poche souple est ouverte en haut, et comprend un col délimitant l'ouverture de la poche souple, le col étant pincé entre une paroi du bouton-poussoir et une bague de fixation, cette paroi formant le plafond de la chambre de dosage ; cela simplifie le montage de la poche souple ;
- la poche souple peut notamment être réalisée en matière souple de shore A compris entre 30 et 90 et/ou un Thermo Plastique Elastomère;
- le dispositif de distribution selon l'invention est agencé de manière à délivrer des doses de produit de 0,20 millilitres (ml) à 5.0 ml ; le dispositif de est particulièrement adapté pour de tels doses.

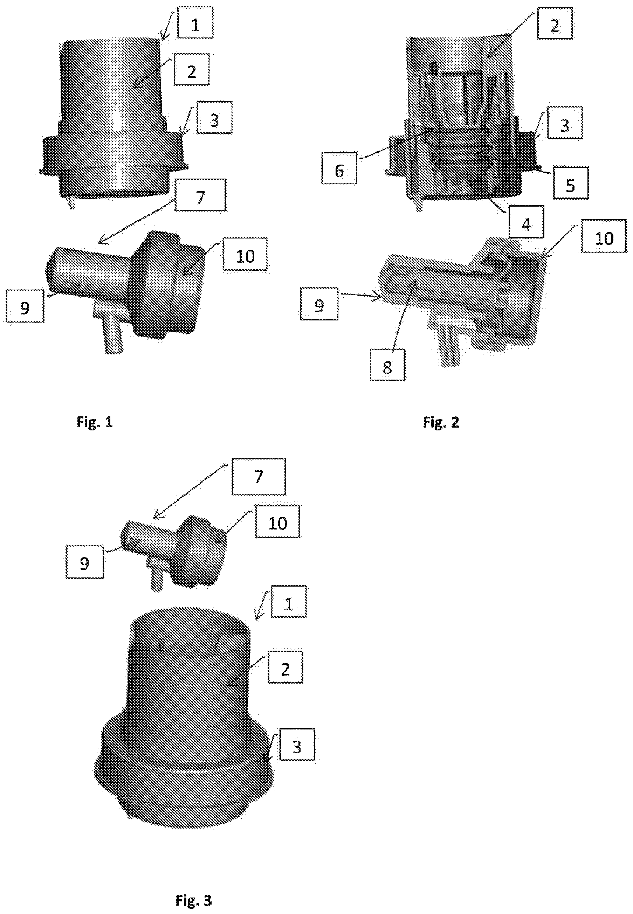

Dans la présente demande, les termes « haut » et « bas », « supérieur » et « inférieur », « avant » et « arrière » sont appliqués selon l'orientation des différents éléments tels qu'ils sont illustrés dans les figures 1 à 7 et 9 à 15.

### Brève description des figures

D'autres caractéristiques et avantages de l'invention apparaîtront à la lecture de la description détaillée des exemples non limitatifs qui suivent, pour la compréhension de laquelle on se reportera aux dessins annexés, parmi lesquels:
- la figure 1 est une vue de côté d'un moteur de pompe et d'un dispositif de fermeture selon un premier exemple de réalisation de l'invention, avant montage ensemble de ceux-ci en vue de former un dispositif de distribution selon un premier exemple de réalisation, le dispositif de fermeture est ici représenté à une échelle supérieure de celle du moteur de pompe ;
- la figure 2 est une coupe verticale des éléments de la figure 1 ;
- la figure 3 représente les éléments de la figure 1 mais à la même l'échelle, le dispositif de fermeture étant prêt à être positionné par le haut dans un logement dédié du moteur de pompe;
- la figure 4 représente le dispositif de distribution des figures précédentes assemblé avec une coiffe de bouton poussoir ;
- la figure 5 représente l'un des éléments isolé de la figure 2, ici le bouton poussoir ;
- la figure 6 représente l'un des éléments isolé de la figure 2, ici la buse de sortie ;
- la figure 7 illustre le dispositif de fermeture de la figure 2 pris isolément;
- la figure 8 une vue en coupe de l'un des éléments isolé de la figure 7, ici la cloche, mais selon un plan transversal, orthogonal au plan de coupe de la figure 7 et passant par un axe longitudinal de l'obturateur;
- la figure 9 est la même vue que la figure 7 mais selon une légère perspective avant ;
- les figures 10 à 13 illustrent le fonctionnement d'un dispositif de distribution selon un deuxième exemple de réalisation de l'invention ;
- les figures 14 et 15 représentent une vue en coupe verticale d'un dispositif de distribution selon un troisième exemple de réalisation, respectivement en position déployée et en position comprimée.

### Description détaillée

Les figures 1 à 4 illustrent un premier exemple de réalisation d'un dispositif de distribution selon l'invention. Ici, ce dispositif de distribution est une pompe de distribution de produits cosmétiques composée :
- d'un ensemble moteur de pompe 1 avec un bouton poussoir 2, un organe de liaison, ici une bague de raccordement 3, sur le réservoir contenant la crème (ce réservoir n'est pas représenté), un clapet bas 4, une chambre de dosage 5 et un moyen de rappel 6 sous forme de soufflet élastiquement déformable ;
- d'un premier exemple de réalisation d'un dispositif de fermeture 7 selon l'invention, ici en trois pièces comprenant un clapet haut 8, une buse de sortie 9 et une cloche 10 de fixation non étanche du clapet haut, ce dispositif de fermeture 7 étant ici assemblé verticalement sur le dessus du bouton poussoir ;
- une coiffe d'habillage 11 du bouton poussoir 2.

Selon l'invention, comme ici, l'ensemble forme une pompe cosmétique a deux clapets, avec une partie du dispositif de fermeture, à savoir l'extrémité de la buse 9 et son trou de sortie 15 dépassant hors du dispositif de distribution.

La bague de raccordement 3 permet la liaison entre le réservoir contenant le produit et le moteur de la pompe 1.

Cet organe de liaison peut être réalisé en une matière plastique, préférentiellement du Polypropylène, ou selon un autre procédé de réalisation peut être moulé en deux matières par bi-injection, par exemple la première injection étant en Polypropylène, et la seconde injection réalisant un joint injecté pour amélioration de la liaison étanche avec le réservoir.

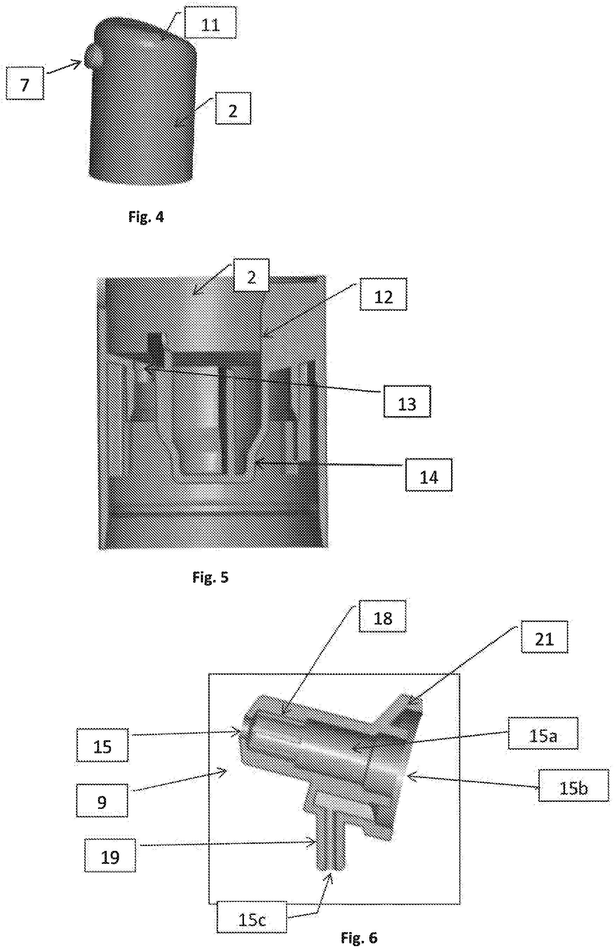

Selon l'invention, comme dans cet exemple et comme illustré en figure 5, le bouton poussoir 2 peut être ouvert en haut et en bas avec une paroi de séparation 12 comportant un canal de raccordement 13 et un réducteur de volume mort 14 coopérant, comme illustré en figure 2, d'un côté avec la chambre de dosage 5 et de l'autre côté avec le dispositif de fermeture 7.

Selon l'invention, comme ici, ce bouton poussoir 2 peut être formé en une seule pièce monobloc. De préférence mais de manière non limitative, le bouton poussoir 2 est moulé en Polypropylène.

Comme on peut le voir en figure 2, le soufflet 6 intègre le clapet bas 4, la chambre de dosage 5 et des parois latérales en accordéon, ces parois d'une part délimitant ainsi la chambre de dosage, et d'autre part formant un organe de rappel élastique du soufflet d'une configuration comprimée vers une configuration déployée.

Ce soufflet peut, par exemple comme ici, être moulé en une seule matière, notamment en Polyéthylène, préférentiellement mais de manière non limitative un polyéthylène à ultra basse densité (ou ULDPE pour « Ultra Low Density Poly Ethylene » en langue anglaise).

La chambre de dosage 5 coopère ici avec le réducteur de volume 14 du bouton poussoir 2.

Selon l'invention, le dispositif de fermeture 7 intègre en un seul module :
- La buse 9 de sortie
- Le clapet haut 8
- La cloche de fixation 10.

Comme on peut le voir en figures 1 à 3, ce module est assemblé en un seul ensemble séparément du reste du dispositif de distribution.

La buse de sortie 9, illustrée en figure 6, comprend des parois délimitant une cavité 15a.

Selon l'invention, comme dans cet exemple, la buse 9 peut être formée en une seule pièce monobloc, notamment venue de matière en une seule pièce.

Selon l'invention, comme ici, cette buse 9 peut comprendre uniquement trois orifices communiquant vers l'extérieur de la buse 9 : le trou de sortie 15 à l'avant de la buse, une ouverture arrière 15b et un trou d'admission 15c de produit, par exemple de la crème.

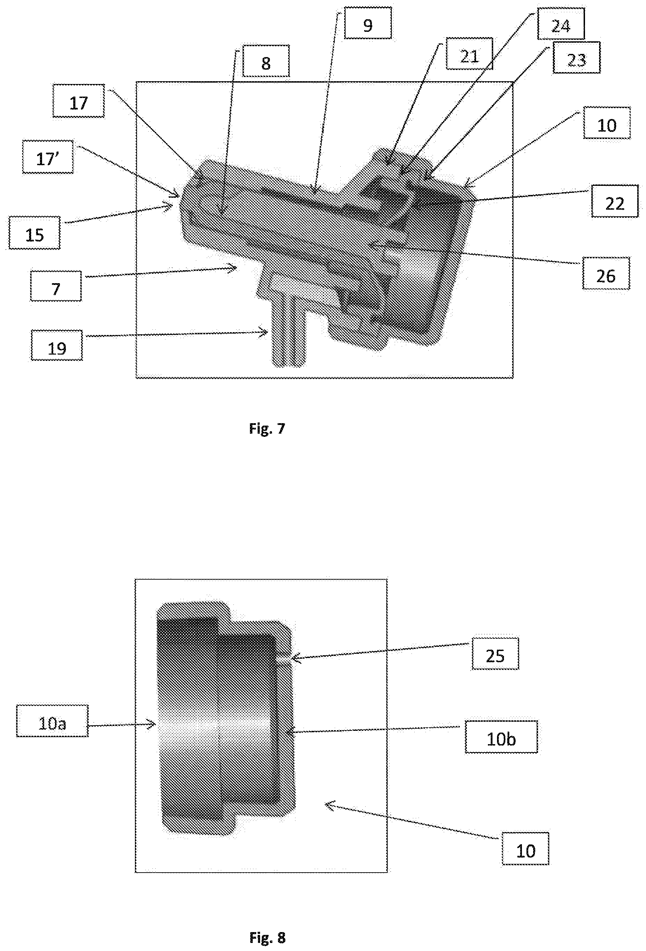

Comme ici, la buse 9 peut comprendre :
- le trou de sortie 15 du produit, coopérant en position de fermeture de ce trou-ci avec une première extrémité 17 du clapet haut 8, cette première extrémité formant ainsi un obturateur 17 du trou de sortie 15,
- des moyens de guidage 18 du clapet haut 8, en particulier de l'obturateur 17, ici un guidage en coulissement,
- un tube de connexion 19 permettant de coopérer avec le canal de raccordement 13 du bouton poussoir 2, visible en figure 5, pour permettre à la crème de passer de la chambre de dosage 5 vers le dispositif de fermeture 7,en entrant par le trou d'admission 15c,
- un moyen de fixation 21 de la cloche de fixation 10 qui, comme illustré en figure 7, permet de fermer l'ouverture arrière 15b, par serrage de manière étanche de la membrane 22 du clapet haut 8, notamment des bords de celle-ci, entre une butée 23 de la cloche de fixation 10 et une butée 24 de la buse 9.

Comme illustré en figure 7, le clapet haut 8 comporte une partie rigide 26, qui sert de squelette rigide et des parties souples, à savoir ici un téton 17' situé à l'avant du clapet haut 8 et la membrane 22, ici élastique, située à l'arrière du clapet haut 8.

Ici, le clapet haut 8 réalise ainsi les fonctions suivantes :
- une fonction d'étanchéité au niveau du téton de l'extrémité 17 du clapet haut 8 avec le trou 15 de la buse de sortie 9 ;
- une fonction d'étanchéité au niveau de la membrane souple 22 du clapet haut 8 entre la butée 24 de la buse de sortie 9 et entre la butée 23 de la cloche de fixation 10, assurant ainsi une fermeture étanche de l'ouverture arrière 15b ;
- une fonction de déformation élastique et de rappel élastique au niveau de la membrane souple 22, et également une fonction de rappel lorsque sa surface est sollicitée par des différences de pression de chaque côté de la membrane 22.

Ici, le clapet haut 8 est moulé en bi-injection, avec pour première injection le squelette rigide 26, qui est moulé préférentiellement mais de manière non limitative en Polypropylène et pour seconde injection les parties souples formant le téton 17' et la membrane 22, qui sont moulées préférentiellement mais de manière non limitative en Thermo Plastique Elastomère (ou TPE).

Selon l'invention, préférentiellement mais de manière non limitative, le téton 17' et la membrane 22 sont fait d'un TPE de dureté shore A comprise entre 30 shore A et 70 Shore A.

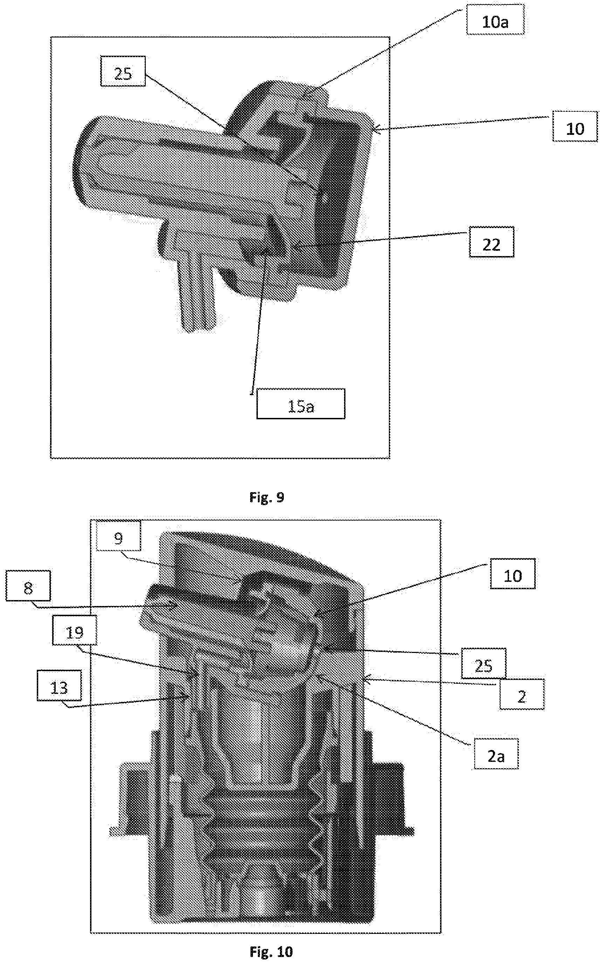

La cloche de fixation 10 permet de réaliser la séparation étanche de la membrane 22 du clapet haut 8 entre l'intérieur de la pompe et l'extérieur. Elle présente, comme toute cloche, une ouverture de base 10a opposée à un fond 10b. Comme illustré en figure 9, la membrane 22 ferme ainsi de manière étanche d'un côté la cavité 15a de la buse de sortie 9, et de l'autre côté l'ouverture de base 10a.

Comme illustré en figures 8 et 9, le fond 10b de la cloche 10 intègre un trou d'éventation 25 ou évent, qui permet d'éviter les surpressions à l'intérieur de la cloche de fixation 10 quand la membrane 22 du clapet haut 8 recule sous la pression de la crème.

Les figures 10 à 13 illustrent les étapes de fonctionnement d'un dispositif de distribution selon un deuxième exemple de réalisation de l'invention, comprenant un dispositif de fermeture selon un deuxième exemple de réalisation de l'invention.

Ce deuxième exemple diffère essentiellement par la forme de la cloche 10 et la fixation de celle-ci avec la buse 9 de sortie. Pour le reste, les premier et deuxième exemples de réalisation sont très similaires et ne seront pas davantage détaillés. Les mêmes références ont d'ailleurs étaient reprises.

Dans le premier exemple de réalisation, le fond 10b de la cloche 10 est essentiellement plat, avec l'évent désaxé, alors que dans le deuxième exemple, il est bombé, l'évent 25 étant centré sur le fond. Ces formes ne sont pas limitatives.

Comme on peut le voir en figure 10, le bouton-poussoir 2 comprend un logement 2a ouvert sur le haut et comprenant une forme complémentaire de l'arrière de la cloche 10, permettant d'y positionner celle-ci en posant le dispositif de fermeture dans le logement depuis le haut. Cette forme complémentaire est donc dans cet exemple arrondie.

Dans le premier exemple de réalisation, l'arrière de la buse 9 forme un manchon cylindrique emmanché dans la cloche 10, par l'ouverture de base 10a, alors que dans celui des figures 10 à 13, les bords de l'ouverture centrale de la cloche 10 sont clippés à l'intérieur d'un manchon cylindrique formé par l'arrière de la buse 9. D'une manière générale, ces principes de fixation permettent un bon serrage de la membrane 22 et sont simples. Ils ne sont cependant pas limitatifs. L'arrière de la buse et la cloche peuvent donc être assemblés l'un à l'autre par emmanchement, vissage ou clippage.

Même si cela n'est illustré que dans le deuxième exemple, selon l'invention, le tube de connexion 19 peut être inséré dans le canal de raccordement 13, notamment de manière étanche. Le tube de connexion 19 peut donc également servir de moyen de positionnement par le haut. Le logement et d'une manière générale le bouton poussoir peuvent également comprendre d'autres moyens de positionnement.

Le mode de fonctionnement est donc illustré aux figures 10 à 13 pour le deuxième exemple de réalisation mais est transposable au premier exemple de réalisation.

Le dispositif de distribution est représenté en figure 10 en position fermée. Dans cette position, au repos, le bouton poussoir 2 est remonté et le clapet haut 8 est en position fermée.

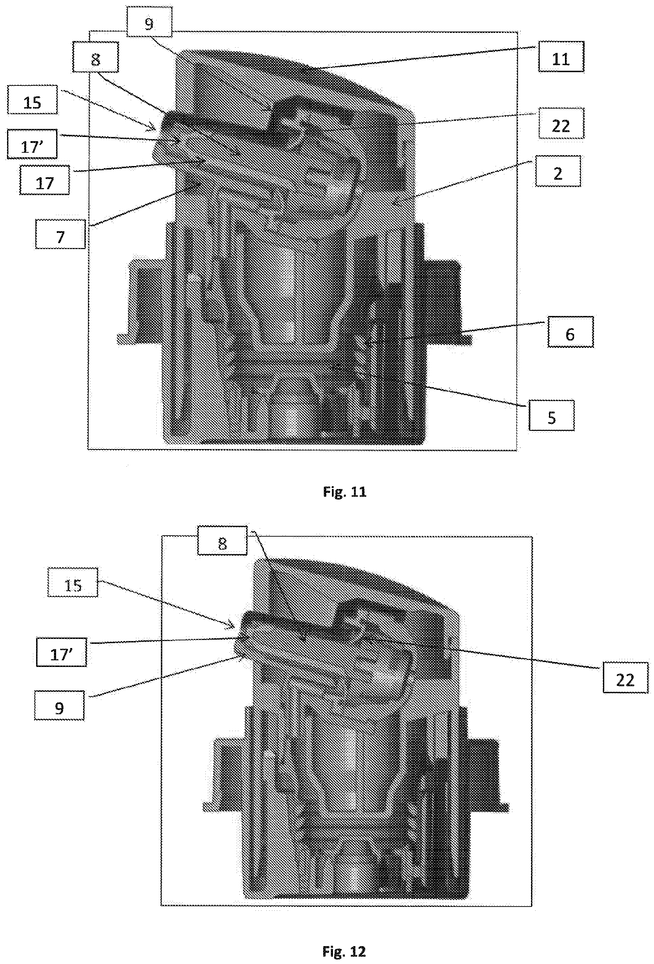

Lors de l'actionnement du système de distribution, comme en figure 11, en pressant sur la coiffe d'habillage 11 du bouton poussoir, on fait descendre l'ensemble coiffe d'habillage 11, bouton poussoir 2, et système de fermeture 7, et les parois latérales du soufflet 6 se compriment. Lors de cette opération, le produit contenu dans la chambre de dosage 5 est comprimé par la réduction de volume du soufflet 6 et crée une pression sur la membrane souple 22 du clapet haut 8, qui se déforme alors de manière élastique et permet à l'obturateur 17 de reculer, et donc d'ouvrir le trou de sortie 15 de la buse 9, qui est également le trou de sortie du dispositif de fermeture 7 et du dispositif de distribution. Cela permet au produit de sortir par le trou de sortie 15. Le produit comprimé ne peut sortir que par le clapet haut 8, le clapet bas 4 étant en position fermée, suite à la pression dans la chambre de dosage 5. Lorsque l'obturateur 17 est reculé au maximum, il est comme en figure 2, en position reculée.

A la fin de l'actionnement, quand le bouton poussoir 2 est en position basse, comme illustré en figure 12, il n'y a plus de surpression dans la chambre de dosage 5, la pression s'équilibre de chaque côté de la membrane 22 du clapet haut 8, la membrane 22, qui a été déformée élastiquement sous l'effet de la pression, reprend sa position initiale et repousse le clapet haut 8 en avant, donc vers sa position avancée, fermant ainsi le trou de sortie 15 de la buse de sortie 9 par le téton de l'extrémité 17 du clapet haut 8, qui vient en contact sur la périphérie du trou de sortie 15.

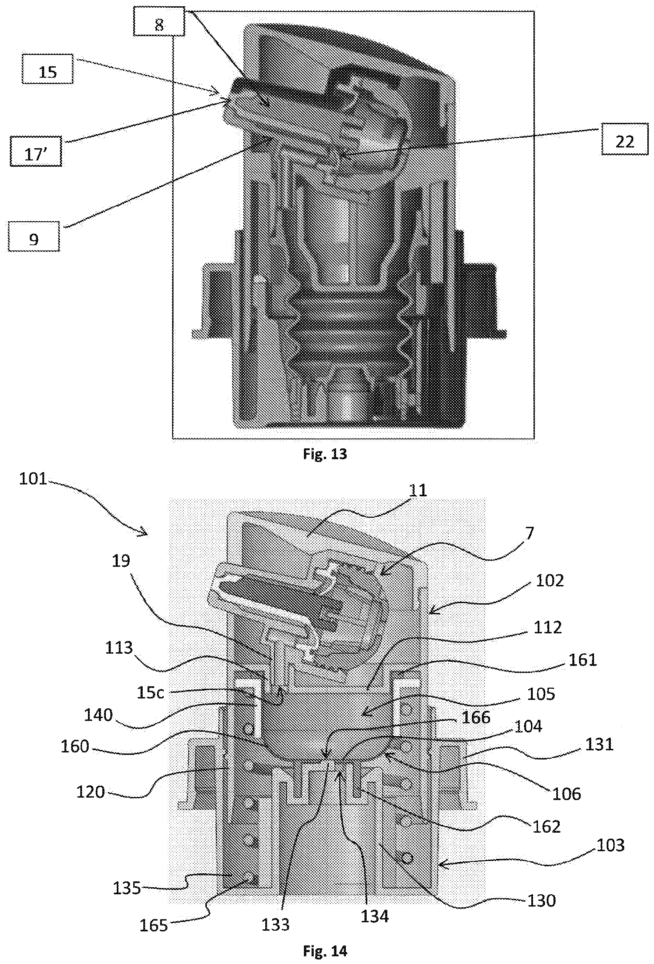

Lors de la remontée du bouton poussoir 2, comme illustré en figure 13, sous l'effet de la force de rappel générée par les parois latérales du soufflet 6, le bouton poussoir 2 remonte. La chambre de dosage 5 voit alors son volume augmenter et crée ainsi une dépression à l'intérieur de la pompe 1, donc dans la cavité 9a de la buse 9. Cette dépression agit sur la membrane 22 du clapet haut 8 pour faire avancer encore plus en avant le clapet haut 8 et faire pénétrer l'extrémité souple 17 du clapet haut 8 à l'intérieur du trou de sortie 15 de la buse 9, l'obturateur étant alors dans sa position avancée.

Ici, l'extrémité 17 du clapet haut 8, qui est réalisée en matière souple de type TPE (Thermo Plastique Elastomère) de shore A compris entre 30 et 90, comporte un téton qui est ainsi comprimé radialement lorsqu'il pénètre dans le trou de sortie 15, permettant ainsi de renforcer l'étanchéité du système de fermeture 7, vis-à-vis des contaminants d'origine chimique ou d'origine bactérien.

L'utilisation de la dépression qui agit sur la membrane 22 pour forcer l'extrémité 17 du clapet haut 8 à entrer en force dans le trou de sortie 15 de la buse 9 permet d'éviter d'avoir à utiliser un moyen de rappel élastique puissant pour réaliser cette opération. Cela permet aussi au clapet haut 8 de pouvoir s'ouvrir plus facilement, car il n'aura pas à contrer la force du moyen de rappel élastique puissant.

Ici, comme d'une manière générale selon l'invention, le dispositif de fermeture peut donc être dépourvu de moyen de rappel autre que la membrane, notamment dépourvu de moyen élastique de rappel autre que la membrane, tel qu'un ressort, tel qu'un ressort à spire(s).

De plus la rentrée en force du téton 17' du clapet haut dans le trou de sortie 15 de la buse 9 permet de réduire au maximum, voire de supprimer, les volumes morts liés au trou et d'avoir le téton 17' qui affleure à l'extérieur du trou de sortie 15 de la buse, évitant ainsi la stagnation de crème à l'extérieur du système de fermeture 7.

Pendant le même temps, la dépression générée dans la chambre de dosage 5 ouvre le clapet bas 4 qui permet à la crème de remplir la chambre de dosage 5 et de faire chuter la dépression à l'intérieur du dispositif de distribution. La pompe est ainsi prête à fonctionner pour un nouveau cycle de distribution de produit.

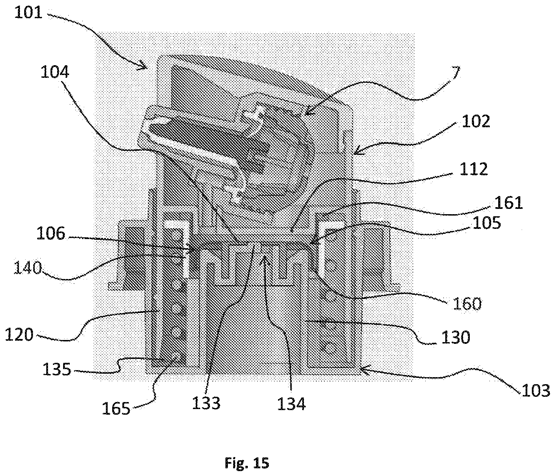

Les figures 14 et 15 illustrent un troisième exemple de réalisation de dispositif de distribution selon l'invention, ici la pompe 101.

Dans ce mode, le dispositif de fermeture 7 est identique à celui employé dans l'exemple des figures 10 à 13. Il ne sera donc pas davantage détaillé. La coiffe 11 et le haut du bouton-poussoir 102 sont également identiques et renferment entre eux le dispositif de fermeture 7.

Ici, la chambre de dosage 105 est, comme dans l'exemple précédent, également délimité latéralement par des parois latérales souples 160 s'affaissant sur elle-même et diminuant ainsi le volume de la chambre de dosage 105 pour en expulser le fluide qu'elle contient. Cependant, au lieu d'être délimitée par un soufflet 6, la chambre de dosage 105 est dans ce troisième exemple délimitée par une poche souple 106.

Dans ce troisième exemple de réalisation, la pompe 101 comprend également un organe de raccordement 103 à un récipient de produit liquide à pâteux, non représenté, notamment grâce à une gorge de raccordement 131 se clippant de manière étanche sur le col du récipient.

Le bouton-poussoir 102 est mobile par rapport à l'organe de raccordement 103 entre une position basse, illustrée en figure 15, et une position haute, illustrée en figure 14.

Selon l'invention, comme ici, l'organe de raccordement 103 peut former un piston, notamment central, qui s'étend jusqu'à un niveau inférieur au niveau de la gorge de raccordement 131. L'intérieur du piston 130 forme ainsi un canal d'aspiration du produit dans le récipient. L'extérieur du piston forme dans l'organe de raccordement une projection saillante vers le haut.

Autour de ce piston 130, l'organe de raccordement 103 forme une gorge de coulissement 135 orientée vers le haut et à l'intérieur de laquelle coulisse la jupe 120 du bouton poussoir 102.

Le piston 130 comprenant une face supérieure présentant une ouverture sommitale 134 s'ouvrant sur le bas dans le canal d'aspiration.

Une poche 106 souple est agencée dans la pompe 101 à l'intérieur de l'espace délimité entre la jupe 120 et la paroi externe de la gorge de raccordement 131. Cette poche 106 est fixée en haut au bouton-poussoir 102 et en bas au piston 130.

La poche 106 est ici d'une forme simple.

Cette poche 106 présente un fond percé d'un orifice d'entrée 166. Ce fond est agencé pour se plaquer contre une portion de la surface supérieure du piston 130, ainsi que contre l'ouverture sommitale 134 de ce dernier, lorsque la pression augmente dans la chambre de dosage 105, à savoir lors du refoulement d'un fluide contenu dans cette dernière vers le dispositif de fermeture 7. Ce fluide est l'air à l'amorçage de la pompe 1 et le produit une fois la pompe 1 amorcée.

La face supérieure du piston 130 présente un téton 133 décalé par rapport à l'ouverture sommitale 134, et agencé de manière à rentrer en force dans l'orifice d'entrée 166 lorsque le fond se plaque contre la face supérieure du piston 130, fermant ainsi de manière étanche l'orifice d'entrée 166.

La poche 106 et donc ici la chambre de dosage 105 sont fermées en haut par une paroi 112 du bouton poussoir 102, au-dessus de laquelle est logé le dispositif de fermeture 7.

Le tube de connexion 19 de ce dernier se loge dans un canal de raccordement 113 de cette paroi 112, qui débouche dans la chambre de dosage 105 par une sortie de dosage communiquant directement avec le trou d'admission 15c du dispositif de fermeture 7.

Comme illustré en figure 14, lorsque le bouton-poussoir 102 est en position haute, la poche 106 est agencée au-dessus du piston 130.

Lorsque le bouton-poussoir 102 descend vers la position basse, la poche 106 s'affaisse sur le piston 130, en se retournant sur elle-même, ses parois latérales 160 s'enroulant alors autour du piston 130, comme on peut le voir en figure15.

Cet affaissement, entraine une diminution du volume de la chambre de dosage 105, et ainsi une augmentation de pression dans cette dernière, entrainant le refoulement du produit hors de la chambre de dosage 105 par le trou d'admission 15c, entrainant ainsi l'ouverture du dispositif de fermeture 7, et donc la distribution du produit hors de la pompe 101.

Le moteur de pompe comprend donc l'organe de raccordement 103, la poche 106, le bouton poussoir 102, le dispositif de fermeture 7 et la coiffe 11. Il comprend également un moyen élastique de rappel, formé ici par un ressort 165 à spires, qui se comprime lors de la descente du bouton-poussoir 102.

Ensuite, le ressort 165 rappelle le bouton-poussoir 102 vers la position haute, ce dernier entraine le haut de la poche 106 dans sa course. La poche 106 se déroule alors et se déploie au-dessus du piston 130, entrainant une diminution de pression dans la chambre de dosage 105, et donc une aspiration.

Lors de cette diminution de pression, comme dans l'exemple précédent, le dispositif de fermeture se ferme. En revanche, le clapet bas 104 s'ouvre. Entrainant l'aspiration de produit dans la chambre de dosage 105.

Dans ce troisième exemple de réalisation, l'aspiration entraine l'écartement du fond de la poche 106 du sommet du piston 130. L'orifice d'entrée 166 se dégage ainsi du téton 133. Par ailleurs, il se forme alors un passage passant entre le fond de la poche 106 et la portion de la face supérieure du piston 130 contre laquelle ce fond était plaqué. Ce passage communique entre l'ouverture sommitale 134 et l'orifice d'entrée 166. Ainsi le produit peut être aspiré jusque dans la poche souple 106.

Ainsi, d'une manière générale dans ce troisième exemple de réalisation, la poche 106 peut former à la fois le fond et les parois 160 qui s'affaissent de la chambre de dosage, donc former la chambre de dosage à volume variable, et former à la fois le clapet bas 104.

La poche souple 106 peut notamment être réalisée en matière souple de type TPE de shore A compris entre 30 et 90.

Ici l'orifice d'entrée 166 et le téton 133 sont centrés par rapport respectivement au fond de la poche 106 et au piston 130. L'ouverture sommitale 134 est elle décentrée.

Les fixations de la poche 106 peuvent être variées.

Selon l'invention comme ici, la poche 106 est ouverte en haut, et comprend un col 161 délimitant l'ouverture supérieure de la poche 106. Le col 161 est pincé entre la paroi 112 du bouton-poussoir 102 et une bague de fixation 140, cette paroi formant le plafond de la chambre de dosage 105. Outre un montage simplifié de la poche souple 106, le bord de ce col 161 forme ainsi le joint étanche entre le sommet de la poche 106 et la paroi 112. Avec une pièce simple on réalise ainsi une fonction supplémentaire.

Selon l'invention comme ici, la poche 106 peut comprendre un manchon de fixation 162 saillant depuis le fond de cette poche et à l'extérieur du volume définissant la chambre de dosage 105. Le manchon de fixation 162 est emmanché dans une gorge sommitale circulaire du piston entourant le téton 133 et l'ouverture sommitale 134. Alternativement, le manchon de fixation 162 peut être surmoulé dans cette gorge sommitale.

La gorge sommitale est ici centrée sur le téton 133.

La bague de fixation 140 peut comprendre une paroi descendante servant de guidage aux parois latérales 160 de la poche 106, lorsqu'elles s'affaissent.

Cette paroi descendante peut comme ici être d'un diamètre tel qu'elle présente un jeu avec le piston 130, de manière à descendre autour de celui-ci lors du refoulement et de manière à ce que les parois latérales 160 s'enroulent sur elles-mêmes entre cette paroi descendante et le piston 130, comme on peut le voir en figure 15. On améliore ainsi le guidage.

Les spires du ressort 165 sont ici agencées autour du piston et de cette paroi descendante, donc de la poche 106.

Dans les exemples illustrés, la pompe 1 une fois amorcée délivre une dose de 1.5 ml de produits lorsque le bouton-poussoir 2, 102 passe de sa position haute à sa position basse.

D'une manière générale, selon l'invention, le dispositif de fermeture 7 et le dispositif de distribution 1, 101 peuvent présenter une ou plusieurs des caractéristiques et fonctionnalités suivantes :
- Le dispositif de fermeture se compose, notamment uniquement, d'un ensemble de trois pièces assemblé sur la pompe ;
- Le clapet haut comporte à son extrémité un téton souple qui entre dans le trou de sortie de la buse ;
- Le clapet haut est moulé en bi-injection avec une première injection rigide de type PP pour le squelette et une seconde injection en matière souple de type TPE pour la membrane et le téton d'extrémité ;
- La membrane du clapet haut a une surface importante pour pouvoir fonctionner a de basses pressions, c'est à dire inférieure à 2 bars, et notamment à des pressions inférieures à 0.4 bars ;
- Le dispositif de fermeture est assemblé par le haut du bouton poussoir ;
- La cloche de fixation du clapet haut comporte un évent pour avoir la pression atmosphérique à l'intérieur de la cloche, dont le volume intérieur est en contact avec le côté de la membrane opposé au côté de la membrane en vis-à-vis de la buse ;
- La rentrée en force du téton du clapet haut dans le trou de sortie de la buse permet de réduire au maximum, voire de supprimer, les volumes morts liés au trou de sortie et d'avoir le téton qui affleure à l'extérieur du trou de sortie de la buse, évitant ainsi la stagnation de crème à l'extérieur du système de fermeture ;
- Une fonction d'étanchéité au niveau du téton de l'extrémité du clapet haut avec le trou de sortie de la buse ;
- Une fonction d'étanchéité au niveau de la membrane souple du clapet haut entre la buse et la cloche, notamment entre la butée de la buse de sortie et entre la butée de la cloche de fixation.
- Une fonction de déformation élastique et de rappel élastique au niveau de la membrane souple, lorsque sa surface est sollicitée par des différences de pression de chaque côté de la membrane souple.

## Revendications

1. Dispositif de fermeture (7) destiné à être monté dans un dispositif de distribution d'un produit à distribuer liquide à pâteux, ledit dispositif de fermeture formant un module consistant en:
- une buse (9) de sortie comprenant une cavité (15a) et des parois extérieures délimitant cette cavité, ces parois extérieures présentant plusieurs trous et ouverture traversants : un trou de sortie (15) à l'avant de la buse, une ouverture arrière (15b), et un trou d'admission (15c) destiné à être connecté à une chambre de dosage (5) d'un moteur de pompe (1) du dispositif de distribution,
- un clapet haut (8) formé uniquement par :
∘ un obturateur (17), agencé à l'intérieur de la cavité et mobile entre une position avancée dans laquelle il obture le trou de sortie et une position reculée dans laquelle il dégage ce trou de sortie,
∘ une membrane (22) déformable et fermant de manière étanche l'ouverture arrière et solidaire de l'obturateur, et
∘ un squelette (26) rigide s'étendant entre une première extrémité fermant le trou de sortie en ladite position avancée et une deuxième extrémité portant la membrane,
- une cloche (10) présentant un fond (10b) et une ouverture de base (10a) opposée à ce fond, les bords de l'ouverture de base étant fixés à la buse (9), la membrane fermant de manière étanche également l'ouverture de base, la membrane présentant une souplesse et le dispositif de fermeture étant agencé de manière à ce qu'une dépression à l'intérieur de la cavité entraine une déformation de la membrane vers l'intérieur de la cavité, de manière à ce que la membrane pousse alors l'obturateur vers ladite position avancée.

2. Dispositif de fermeture (7) selon la revendication 1, **caractérisé en ce que** les bords de l'ouverture de base (10a) sont fixés à la buse (9) de manière à ce que la cloche (10) et la buse prennent les bords de la membrane (22) en étau.

3. Dispositif de fermeture (7) selon la revendication 1 ou 2, **caractérisé en ce que** la membrane (22) est formée d'un matériau souple bi-injectée sur ledit squelette.

4. Dispositif de fermeture (7) selon l'une des revendications précédentes, **caractérisé en ce que** l'obturateur (17) est agencé de manière à pénétrer en force dans le trou de sortie (15) lorsque la membrane (22) pousse l'obturateur vers ladite position avancée.

5. Dispositif de fermeture (7) selon la revendication 4, **caractérisé en ce que** l'obturateur (17) présente une extrémité souple compressible radialement.

6. Dispositif de fermeture (7) selon l'une quelconque des revendications précédentes, **caractérisé en ce que** la cloche (10) présente également au moins un évent (25) communiquant entre l'intérieur et l'extérieur de la cloche.

7. Dispositif de de fermeture (7) selon l'une quelconque des revendications précédentes, **caractérisé en ce que** le clapet haut (8) comprend un revêtement souple bi-injecté sur le squelette (26), ce revêtement recouvrant une première extrémité du squelette de manière à former un téton (17') et s'étendant à la deuxième extrémité du squelette en formant la membrane (22) sensiblement transversalement à l'axe longitudinal du squelette.

8. Dispositif de fermeture (7) selon la revendication 7, **caractérisé en ce que** ce revêtement s'étend à la deuxième extrémité du squelette (26) en formant une coupelle sensiblement transversale à l'axe longitudinal du squelette, la coupelle formant la membrane (22).

9. Dispositif de fermeture (7) selon l'une quelconque des revendications précédentes, **caractérisé en ce que** la membrane (22) est élastique de manière à générer, lorsqu'elle se déforme, une force de rappel élastique au niveau de la membrane souple, lorsque sa surface est sollicitée par des différences de pression de chaque côté de la membrane.

10. Dispositif de fermeture (7) selon l'une quelconque des revendications précédentes, **caractérisé en ce qu'**il est dépourvu de moyen de rappel de l'obturateur (17) vers la position avancée autre que la membrane (22).

11. Dispositif de distribution de produit liquide à pâteux comprenant :
- un moteur de pompe (1) avec une chambre de dosage (5 ; 105),
- un clapet bas (4 ; 104) pour ouvrir ou fermer l'entrée de cette chambre,
- un logement (2a),
- un dispositif de fermeture (7) selon l'une des revendications précédentes, logé dans le logement, et agencé de manière à ce que le trou d'admission (15c) soit en communication avec l'intérieur de la chambre de dosage.

12. Dispositif de distribution selon la revendication 11, dans lequel le logement (2a) est ouvert en haut de manière à ce que le dispositif de fermeture (7) se monte par le haut dans le logement.

13. Dispositif de distribution selon la revendication 11 ou 12, comprenant un organe de raccordement (103) à un récipient de produit liquide à pâteux, et dans lequel le moteur de pompe (1) comprend en outre :
- un bouton-poussoir (102) mobile par rapport à l'organe de raccordement entre une position basse et une position haute,
- un piston (130) fixe par rapport à l'organe de raccordement, le piston comprenant une ouverture sommitale communiquant d'un côté avec l'intérieur de la chambre de dosage (105) et étant destinée de l'autre côté à être en communication avec le contenu du récipient,
- une poche souple (106) délimitant la chambre de dosage latéralement, fixée en haut au bouton-poussoir et en bas au piston,
- un moyen élastique de rappel (165) agencé de manière à ce que sa contrainte augmente quand le bouton-poussoir se déplace vers sa position basse,
la poche souple et le piston étant agencés de manière à ce que lorsque le bouton-poussoir est en position haute, la poche souple soit agencée au-dessus du piston, à ce que lorsque le bouton-poussoir descend vers la position basse la poche souple s'affaisse sur le piston, entrainant une augmentation de pression dans la chambre de dosage, et à ce que lorsque le bouton-poussoir monte vers la position haute la poche souple se déploie au-dessus du piston, entrainant une diminution de pression dans la chambre de dosage, le clapet bas étant agencé de manière à ouvrir ou fermer l'ouverture sommitale sous l'exercice respectivement d'une diminution de pression ou d'une augmentation de pression dans la chambre de dosage.

14. Dispositif de distribution selon la revendication 13, dans lequel la poche souple (106) est agencée de manière à ce qu'elle s'affaisse en se retournant sur elle-même, ses parois latérales (160) s'enroulant alors autour du piston (130).

15. Dispositif de distribution selon la revendication 13 ou 14, dans lequel la poche souple (106) et le clapet bas (104) forment une seule pièce monobloc formée d'un seul matériau.

## Patentansprüche

1. Verschlussvorrichtung (7) zum Einbauen in eine Abgabevorrichtung für ein abzugebendes flüssiges bis pastöses Produkt, wobei die Verschlussvorrichtung ein Modul bildet, bestehend aus:
- einer Auslassdüse (9) mit einem Hohlraum (15a) und Außenwänden, die diesen Hohlraum begrenzen, wobei diese Außenwände mehrere Durchgangslöcher und eine Durchgangsöffnung aufweisen: ein Auslassloch (15) an der Vorderseite der Düse, eine hintere Öffnung (15b) und ein Einlassloch (15c) zum Verbinden mit einer Dosierkammer (5) eines Pumpenmotors (1) der Abgabevorrichtung,
- einem oberen Ventil (8), das nur gebildet ist durch:
∘ einen Verschluss (17), der im Inneren des Hohlraums angeordnet und zwischen einer vorgeschobenen Position, in der er das Auslassloch verschließt, und einer zurückgezogenen Position, in der er dieses Auslassloch freigibt, beweglich ist,
∘ eine verformbare Membran (22), die die hintere Öffnung dichtend verschließt und fest mit dem Verschluss verbunden ist, und
∘ ein starres Gerüst (26), das sich zwischen einem ersten Ende, das das Auslassloch in der vorgeschobenen Position verschließt, und einem zweiten Ende, das die Membran trägt, erstreckt,
- eine Glocke (10), die einen Boden (10b) und eine diesem Boden gegenüberliegende Bodenöffnung (10a) aufweist, wobei die Ränder der Bodenöffnung an der Düse (9) befestigt sind und die Membran auch die Bodenöffnung dichtend verschließt,
wobei die Membran flexibel ist und die Verschlussvorrichtung so angeordnet ist, dass ein Unterdruck im Inneren des Hohlraums eine Verformung der Membran zum Inneren des Hohlraums hin bewirkt, so dass die Membran dann den Verschluss in die vorgeschobene Position drückt.

2. Verschlussvorrichtung (7) nach Anspruch 1, **dadurch gekennzeichnet, dass** die Ränder der Bodenöffnung (10a) so an der Düse (9) befestigt sind, dass die Glocke (10) und die Düse die Ränder der Membran (22) einklemmen.

3. Verschlussvorrichtung (7) nach Anspruch 1 oder 2, **dadurch gekennzeichnet, dass** die Membran (22) aus einem flexiblen Material gebildet ist, das auf das Gerüst durch Zweikomponenten-Spritzen gespritzt ist.

4. Verschlussvorrichtung (7) nach einem der vorhergehenden Ansprüche, **dadurch gekennzeichnet, dass** der Verschluss (17) so angeordnet ist, dass er mit Kraft in das Auslassloch (15) eindringt, wenn die Membran (22) den Verschluss in die vorgeschobene Position drückt.

5. Verschlussvorrichtung (7) nach Anspruch 4, **dadurch gekennzeichnet, dass** der Verschluss (17) ein radial zusammendrückbares flexibles Ende aufweist.

6. Verschlussvorrichtung (7) nach einem der vorhergehenden Ansprüche, **dadurch gekennzeichnet, dass** die Glocke (10) auch mindestens eine Entlüftung (25) aufweist, die zwischen dem Inneren und dem Äußeren der Glocke in Verbindung steht.

7. Verschlussvorrichtung (7) nach einem der vorhergehenden Ansprüche, **dadurch gekennzeichnet, dass** das obere Ventil (8) eine flexible, durch Zweikomponenten-Spritzen gespritzte Beschichtung auf dem Gerüst (26) aufweist, wobei diese Beschichtung ein erstes Ende des Gerüsts bedeckt, so dass ein Nippel (17') gebildet wird, und sich bis zum zweiten Ende des Gerüsts erstreckt, wobei es die Membran (22) im Wesentlichen quer zur Längsachse des Gerüsts bildet.

8. Verschlussvorrichtung (7) nach Anspruch 7, **dadurch gekennzeichnet, dass** sich diese Beschichtung bis zum zweiten Ende des Gerüsts (26) erstreckt und eine im Wesentlichen quer zur Längsachse des Gerüsts verlaufende Schale bildet, wobei die Schale die Membran (22) bildet.

9. Verschlussvorrichtung (7) nach einem der vorhergehenden Ansprüche, **dadurch gekennzeichnet, dass** die Membran (22) elastisch ist, um bei ihrer Verformung eine elastische Rückstellkraft an der flexiblen Membran zu erzeugen, wenn ihre Oberfläche durch Druckunterschiede auf beiden Seiten der Membran belastet wird.

10. Verschlussvorrichtung (7) nach einem der vorhergehenden Ansprüche, **dadurch gekennzeichnet, dass** sie außer der Membran (22) keine Mittel zur Rückstellung des Verschlusses (17) in die vorgeschobene Position aufweist.

11. Abgabevorrichtung für ein flüssiges bis pastöses Produkt, umfassend:
- einen Pumpenmotor (1) mit einer Dosierkammer (5; 105),
- ein unteres Ventil (4; 104) zum Öffnen oder Schließen des Eingangs zu dieser Kammer,
- eine Aufnahme (2a),
- eine Verschlussvorrichtung (7) nach einem der vorhergehenden Ansprüche, die in der Aufnahme aufgenommen und so angeordnet ist, dass das Einlassloch (15c) mit dem Inneren der Dosierkammer in Verbindung steht.

12. Abgabevorrichtung nach Anspruch 11, wobei die Aufnahme (2a) nach oben offen ist, so dass die Verschlussvorrichtung (7) von oben in die Aufnahme passt.

13. Abgabevorrichtung nach Anspruch 11 oder 12, umfassend ein Element (103) zum Anschließen an einen Behälter für ein flüssiges bis pastöses Produkt, und wobei der Pumpenmotor (1) ferner umfasst:
- einen Druckknopf (102), der relativ zu dem Anschlusselement zwischen einer unteren Position und einer oberen Position beweglich ist,
- einen Kolben (130), der relativ zu dem Anschlusselement feststeht, wobei der Kolben eine Scheitelöffnung aufweist, die auf einer Seite mit dem Inneren der Dosierkammer (105) in Verbindung steht und auf der anderen Seite dazu bestimmt ist, mit dem Inhalt des Behälters in Verbindung zu stehen,
- einen flexiblen Beutel (106), der die Dosierkammer seitlich begrenzt und oben am Druckknopf und unten am Kolben befestigt ist,
- ein elastisches Rückstellmittel (165), das so angeordnet ist, dass seine Spannung ansteigt, wenn sich der Druckknopf in seine untere Position bewegt,
wobei der flexible Beutel und der Kolben so angeordnet sind, dass, wenn sich der Druckknopf in der oberen Position befindet, der flexible Beutel über dem Kolben angeordnet ist, dass, wenn sich der Druckknopf nach unten in die untere Position bewegt, der flexible Beutel auf dem Kolben zusammenfällt, wodurch ein Druckanstieg in der Dosierkammer verursacht wird und dass, wenn sich der Druckknopf in die obere Position bewegt, sich der flexible Beutel über den Kolben ausdehnt, wodurch eine Druckabnahme in der Dosierkammer verursacht wird, wobei das untere Ventil so angeordnet ist, dass es die Scheitelöffnung unter der Wirkung einer Druckabnahme bzw. eines Druckanstiegs in der Dosierkammer öffnet oder schließt.

14. Abgabevorrichtung nach Anspruch 13, wobei der flexible Beutel (106) so angeordnet ist, dass er durch Drehen um sich selbst zusammenfällt, wobei sich seine Seitenwände (160) daraufhin um den Kolben (130) wickeln.

15. Abgabevorrichtung nach Anspruch 13 oder 14, wobei der flexible Beutel (106) und das untere Ventil (104) ein einziges integrales Teil bilden, das aus einem einzigen Material besteht.

## Claims

1. A closure device (7) intended to be mounted in a device for dispensing a liquid-to-pasty product to be dispensed, said closure device forming a module consisting of:
- an outlet nozzle (9) comprising a cavity (15a) and outer walls delimiting this cavity, these outer walls having several through-holes and through-openings: an outlet hole (15) at the front of the nozzle, a rear opening (15b), and an intake hole (15c) intended to be connected to a metering chamber (5) of a pump motor (1) of the dispensing device,
- a top valve (8) composed only of:
• a shut-off member (17), arranged inside the cavity and movable between a forward position in which it closes off the outlet hole and a retracted position in which it uncovers this outlet hole,
• a deformable membrane (22) which closes the rear opening in a sealed manner and which is rigidly secured to the shut-off member, and
• a rigid skeleton (26) extending between a first end closing off the outlet hole in said forward position and a second end bearing the membrane,
- a bell (10) having an end wall (10b) and a base opening (10a) opposite this end wall, the edges of the base opening being attached to the nozzle (9), the membrane also closing the base opening in a sealed manner,
the membrane having flexibility and the closure device being arranged in such a way that a depression inside the cavity causes deformation of the membrane toward the interior of the cavity, so that the membrane then pushes the shut-off member into said forward position.

2. The closure device (7) as claimed in claim 1, **characterized in that** the edges of the base opening (10a) are attached to the nozzle (9) in such a way that the bell (10) and the nozzle grip the edges of the membrane (22) tightly.

3. The closure device (7) as claimed in claim 1 or 2, **characterized in that** the membrane (22) is made of a flexible material bi-injection molded on said skeleton.

4. The closure device (7) as claimed in one of the preceding claims, **characterized in that** the shut-off member (17) is arranged so as to forcibly enter the outlet hole (15) when the membrane (22) pushes the shut-off member into said forward position.

5. The closure device (7) as claimed in claim 4, **characterized in that** the shut-off member (17) has a radially compressible flexible end.

6. The closure device (7) as claimed in any one of the preceding claims, **characterized in that** the bell (10) also has at least one vent (25) communicating between the interior and the exterior of the bell.

7. The closure device (7) as claimed in any one of the preceding claims, **characterized in that** the top valve (8) comprises a flexible coating bi-injection molded on the skeleton (26), this coating covering a first end of the skeleton so as to form a nipple (17') and extending to the second end of the skeleton, forming the membrane (22) substantially transversely to the longitudinal axis of the skeleton.

8. The closure device (7) as claimed in claim 7, **characterized in that** this coating extends to the second end of the skeleton (26), forming a cup substantially transverse to the longitudinal axis of the skeleton, the cup forming the membrane (22).

9. The closure device (7) as claimed in any one of the preceding claims, **characterized in that** the membrane (22) is elastic so as to generate, when it deforms, an elastic return force at the flexible membrane, when its surface is stressed by differences in pressure on either side of the membrane.

10. The closure device (7) as claimed in any one of the preceding claims, **characterized in that** it does not include means for returning the shut-off member (17) to the forward position, other than the membrane (22) .

11. A device for dispensing a liquid-to-pasty product, comprising:
- a pump motor (1) with a metering chamber (5; 105),
- a bottom valve (4; 104) for opening or closing the inlet to this chamber,
- a housing (2a),
- a closure device (7) according to one of the preceding claims, housed in the housing, and arranged in such a way that the intake hole (15c) is in communication with the interior of the metering chamber.

12. The dispensing device as claimed in claim 11, in which the housing (2a) is open at the top so that the closure device (7) is mounted from above in the housing.

13. The dispensing device as claimed in claim 11 or 12, comprising a connecting member (103) for connection to a container of liquid-to-pasty product, and in which the pump motor (1) further comprises:
- a push button (102) that can move relative to the connecting member between a bottom position and a top position,
- a piston (130) fixed relative to the connecting member, the piston comprising a top opening communicating on one side with the interior of the metering chamber (105) and being intended on the other side to be in communication with the contents of the container,
- a flexible pouch (106) delimiting the metering chamber laterally, attached at the top to the push button and at the bottom to the piston,
- an elastic return means (165) arranged in such a way that its stress increases when the push button moves into its bottom position,
the flexible pouch and the piston being arranged in such a way that when the push button is in the top position, the flexible pouch is arranged above the piston, in such a way that when the push button descends to the bottom position, the flexible pouch collapses on the piston, causing an increase in pressure in the metering chamber, and in such a way that when the push button rises to the top position, the flexible pouch expands above the piston, causing a decrease in pressure in the metering chamber, the bottom valve being arranged in such a way as to open or close the top opening under the effect of a decrease in pressure or an increase in pressure, respectively, in the metering chamber.

14. The dispensing device as claimed in claim 13, in which the flexible pouch (106) is arranged in such a way that it collapses while turning in on itself, its side walls (160) then furling around the piston (130).

15. The dispensing device as claimed in claim 13 or 14, in which the flexible pouch (106) and the bottom valve (104) form a single one-piece part made of a single material.
